(19) Europäisches Patentamt / European Patent Office / Office européen des brevets

(11) **EP 3 164 421 B1**

(12) **EUROPEAN PATENT SPECIFICATION**

(45) Date of publication and mention of the grant of the patent:
**15.05.2019 Bulletin 2019/20**

(21) Application number: **15726636.2**

(22) Date of filing: **08.06.2015**

(51) Int Cl.:
***C08F 2/00*** *(2006.01)*
***C08K 3/24*** *(2006.01)*
***C08K 5/053*** *(2006.01)*
***C08K 5/00*** *(2006.01)*
***C08L 23/12*** *(2006.01)*
***C08K 5/521*** *(2006.01)*
***C08L 23/16*** *(2006.01)*

(86) International application number:
**PCT/EP2015/062713**

(87) International publication number:
**WO 2016/000910 (07.01.2016 Gazette 2016/01)**

(54) **POLYPROPYLENE COMPOSITIONS**

POLYPROPYLENZUSAMMENSETZUNGEN

COMPOSITIONS DE POLYPROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.07.2014 EP 14175166**

(43) Date of publication of application:
**10.05.2017 Bulletin 2017/19**

(73) Proprietor: **Basell Poliolefine Italia S.r.l.**
**20121 Milano (IT)**

(72) Inventors:
- **TSUKAHARA, Takeshi**
  **Kawasaki 210-0863 (JP)**
- **TSURUMI, Nobuyuki**
  **Kawasaki 210-0863 (JP)**
- **KANNO, Shitoshi**
  **Kawasaki 210-0863 (JP)**
- **YAMAMOTO, Kunio**
  **Kawasaki 210-0863 (JP)**
- **NAKAJIMA, Takeshi**
  **Kawasaki 210-0863 (JP)**

(74) Representative: **Colucci, Giuseppe**
**Basell Poliolefine Italia S.r.l.**
**Intellectual Property**
**Piazzale G. Donegani 12**
**44122 Ferrara (IT)**

(56) References cited:
**EP-A1- 2 154 194**
**EP-A1- 2 746 295**
**WO-A1-2013/004804**

EP 3 164 421 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE INVENTION

The present disclosure relates to polypropylene compositions comprising a heterophasic propylene polymer and a nucleating agent. Also, the disclosure relates to a method for the preparation of the polypropylene compositions. Further, the disclosure relates to molded articles, particularly thin wall injection molded articles, obtained from the polypropylene compositions.

BACKGROUND OF THE INVENTION

There is a continual need to improve the impact resistance of polypropylene. Impact resistance is not the only property that must be considered in preparing polypropylene compositions. For example, the market demands that the overall balance of properties must be satisfactory for a broad range of applications. Accordingly, there is a need for polypropylene compositions that have an appropriate balance of properties that include an improved impact resistance.

SUMMARY OF THE INVENTION

According to a first aspect, the invention provides a polypropylene composition comprising:

(a) 68 - 76 wt. %, based upon the total weight of components (a) to (c), of first polymer component being a propylene homopolymer or a copolymer of propylene, wherein the copolymer of propylene contains up to 1.2 wt. %, of ethylene derived units;
(b) 24 - 32 wt. %, based upon the total weight of components (a) to (c), of second polymer component being a copolymer comprising 72 to 86 wt. % ethylene derived units and 14 to 28 wt. % propylene derived units; and
(c) a nucleating agent;
wherein the polypropylene composition has an intrinsic viscosity of the xylene soluble fraction (XSIV) at room temperature up to 1.3 dl/g and a melt flow rate (MFR), measured at 230°C and 2.16 kg, from 30 to 70 g/10 min.

In general, the nucleating agent is present in the polypropylene composition disclosed herein in amount from 0.01 to 2 wt. %, based upon the total weight of components (a) to (c). In some embodiments, the nucleating agent is present in an amount from 0.05 to 1 wt. %, based upon the total weight of components (a) to (c). In more specific embodiments, the nucleating agent is present in an amount from 0.1 to 0.5 wt. %, based upon the total weight of components (a) to (c).

The compositions disclosed herein are endowed with a valuable combination of properties, in particular of impact resistance (in terms of puncture resistance), and of transparency (in terms of haze).

The polypropylene compositions disclosed herein may be prepared by a sequential polymerization. The sequential polymerization process used to prepare the polypropylene compositions comprises at least two sequential polymerization steps. Preferably, the first polymer component (a) is prepared before the second polymer component (b). In the first polymerization step the first polymer component (a) is formed and, in a subsequent polymerization step, the second polymer component (b) is formed. The second and, if present, subsequent steps are operated in the presence of the polymer formed and the catalyst used in the preceding step. In general, the catalyst is added only in the first step since its activity is such that it is still active for all the subsequent steps.

Another aspect of the invention provides a process for the preparation of the polypropylene compositions disclosed herein, said process comprising at least two sequential polymerization stages with each subsequent polymerization being conducted in the presence of the polymeric material formed in the immediately preceding polymerization reaction, wherein the polymerization stage of propylene to the polymer component (a) is carried out in at least one stage, then at least one copolymerization stage of mixtures of ethylene with propylene to the polymer component (b) is carried out. The polymerisation stages is generally carried out in the presence of a stereospecific Ziegler-Natta catalyst.

According to a further aspect, the invention provides a molded article obtained from a propylene polymer composition comprising:

(a) 68 - 76 wt. %, based upon the total weight of components (a) to (c), of first polymer component being a propylene homopolymer or a copolymer of propylene, wherein the copolymer of propylene contains up to 1.2 wt. %, of ethylene derived units;
(b) 24 - 32 wt. %, based upon the total weight of components (a) to (c), of second polymer component being a copolymer comprising 72 to 86 wt. %, ethylene derived units and 14 to 28 wt. %, propylene derived units; and
(c) a nucleating agent;

wherein the composition has an intrinsic viscosity of the xylene soluble fraction (XSIV) at room temperature up to 1.3 dl/g and a melt flow rate (MFR), measured at 230°C and 2.16 kg, from 30 to 70 g/10 min.

According to a still further object the present invention provides a container obtained from a propylene polymer composition comprising:

(a) 68 - 76 wt. %, based upon the total weight of components (a) to (c), of first polymer component being a propylene homopolymer or a copolymer of propylene, wherein the copolymer of propylene contains up to 1.2 wt. %, of ethylene derived units;
(b) 24 - 32 wt. %, based upon the total weight of components (a) to (c), of second polymer component being a copolymer comprising 72 to 86 wt. %, ethylene derived units and 14 to 28 wt. %, propylene derived units; and
(c) a nucleating agent;
wherein the composition has an intrinsic viscosity of the xylene soluble fraction (XSIV) at room temperature up to 1.3 dl/g and a melt flow rate (MFR), measured at 230°C and 2.16 kg, from 30 to 70 g/10 min.

DETAILED DESCRIPTION OF THE INVENTION

The first polymer component (a) is preferably present in amount of 68 to 75 % by weight based upon the total weight of components (a) to (c).
The second polymer component (b) is preferably present in amount of 25 to 32 % by weight based upon the total weight of components (a) to (c).
Nucleating agents are added to polypropylene to improve its physical and/or optical properties.
Examples or nucleating agents that can be used in the different objects of the present invention are:

sodium benzoate,
talc,
1,3:2,4-dibenzylidenesorbitol,
1,3:2,4-bis-(4-methylbenzylidene) sorbitol,
1,3:2,4-bis-(3,4-dimethylbenzylidene) sorbitol,
1,2,3-trideoxy-4,6:5,7-bis-O-[(4-propylphenyl)methylene]-nonitol,
1,3,5-tris(2,2-dimethylpropionylamino)benzene, and
phosphoric esters of the formula

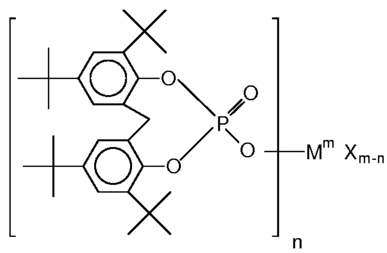

wherein M is aluminum, X is a hydroxy group, m is 3, n is 1 or 2, that are sold under the tradename ADK STAB NA-21 and ADK STAB NA-71 by Adeka Palmarole. These crystal nucleating agents may be used singly or in combination of two or more.

The compositions described herein have an intrinsic viscosity of the xylene soluble fraction (XSIV) at room temperature preferably from 0.1 to 1.3 dl/g, more preferably from 0.5 to 1.3 dl/g, even more preferably from 0.5 to 1.2 dl/g.
The compositions described herein have a melt flow rate (MFR), measured at 230°C and 2.16 kg, preferably from 35 to 60 g/10 min, more preferably from 40 to 50 g/10 min.
When the polymer component (a) is a copolymer of propylene, it preferably contains up to 1.0 wt. %, more preferably up to 0.5 wt. %, of ethylene derived units.
The polymerisation stages may occur in liquid phase, in gas phase or liquid-gas phase. Preferably, the polymerisation of the polymer component (a) is carried out in liquid monomer (e.g. using liquid propylene as diluent), while the copolymerisation stages of the copolymer component (b) is carried out in gas phase. Alternatively, all the sequential polymerisation stages can be carried out in gas phase.
The reaction temperature in the polymerisation stage for the preparation of the polymer component (a) and for the preparation of the copolymer component (b) may be the same or different, and is preferably from 40 to 100 °C. More

preferably, the reaction temperature ranges from 50 to 90 °C for the preparation of polymer component (a), and from 70 to 100 °C for the preparation of polymer component (b).

The pressure of the polymerisation stage to prepare polymer component (a), if carried out in liquid monomer, is the one which competes with the vapor pressure of the liquid propylene at the operating temperature used, and it may be modified by the vapor pressure of the small quantity of inert diluent used to feed the catalyst mixture, by the overpressure of optional monomers and by the hydrogen used as molecular weight regulator.

The polymerisation pressure preferably ranges from 33 to 45 bar, if done in liquid phase, and from 5 to 30 bar if done in gas phase. The residence times relative to the stages depend on the desired ratio between polymer components (a) and (b), and can usually range from 15 minutes to 8 hours. Conventional molecular weight regulators known in the art, such as chain transfer agents (e.g. hydrogen or $ZnEthyl_2$), may be used.

The compositions disclosed herein can also be obtained by preparing separately the said components (a) and (b), by operating with the same catalysts and substantially under the same polymerization conditions as previously explained (except that a wholly sequential polymerization process will not be carried out, but the said components will be prepared in separate polymerization steps) and then mechanically blending said components in the molten or softened state. Conventional mixing apparatuses, like screw extruders, in particular twin screw extruders, can be used.

All the polymerisation stages are suitably carried out in the presence of a catalyst comprising a trialkylaluminium compound, optionally an electron donor, and a solid catalyst component comprising a halide or halogen-alcoholate of Ti and an electron-donor compound supported on anhydrous magnesium chloride. Catalysts having the above-mentioned characteristics are well known in the patent literature; particularly advantageous are the catalysts described in USP 4,399,054 and EP45977. Other examples can be found in USP 4,472,524.

Preferably the polymerisation catalyst is a stereospecific Ziegler-Natta catalyst comprising:

(i) a solid catalyst component comprising Mg, Ti, halogen and an electron donor (internal donor);
(ii) an aluminium-alkyl compound (co-catalyst); and
(iii) optionally, but preferably, an electron-donor compound (external donor).

The internal donor is suitably selected from the esters of mono or dicarboxylic organic acids, such as benzoates, malonates, phthalates and certain succinates. They are described, for example, in USP4,522,930, in EP45977, in WO 00/63261 and in WO 01/57099. Particularly suited are the phthalic acid esters, specially alkylphthalates such as diisobutyl-phthalate, dioctyl-phthalate, diphenyl-phthalate and benzyl-butyl-phthalate, and the succinate acids esters.

Preferred internal donors are those succinate-type compounds of formula (I) below:

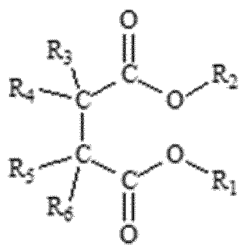

(I)

wherein the radicals $R_1$ and $R_2$, equal to, or different from, each other are a C1-C20 linear or branched alkyl, alkenyl, cycloalkyl, aryl, arylalkyl or alkylaryl group, optionally containing heteroatoms; the radicals $R_3$ to $R_6$ equal to, or different from, each other, are hydrogen or a C1-C20 linear or branched alkyl, alkenyl, cycloalkyl, aryl, arylalkyl or alkylaryl group, optionally containing heteroatoms, optionally containing heteroatoms, and any two of said $R_3$ to $R_6$ radicals can be linked together to form a cycle.

The aluminium-alkyl compounds used as co-catalysts comprise Al-trialkyls, such as Al-triethyl, Al-triisobutyl and Al-tri-n-butyl, and linear or cyclic Al-alkyl compounds containing two or more Al atoms bonded to each other by way of O or N atoms, or $SO_4$ or $SO_3$ groups. The Al-alkyl compound is generally used in such a quantity that the Al/Ti ratio be from 1 to 1000.

The external donor can be of the same type or it can be different from the succinates of formula (I). Suitable external electron-donor compounds include silicon compounds, ethers, esters such as phthalates, benzoates, succinates also having a different structure from those of formula (I), amines, heterocyclic compounds and particularly 2,2,6,6-tetramethylpiperidine, ketones and the 1,3-diethers of the general formula (II):

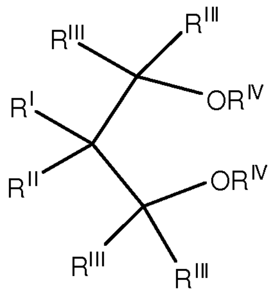

(II)

wherein $R^I$ and $R^{II}$ are the same or different and are C1-C18 alkyl, C3-C18 cycloalkyl or C7-C18 aryl radicals; $R^{III}$ and $R^{IV}$ are the same or different and are C1-C4 alkyl radicals; or the 1,3-diethers in which the carbon atom in position 2 belongs to a cyclic or polycyclic structure made up of 5, 6 or 7 carbon atoms and containing two or three unsaturations. Ethers of this type are described in European patent applications EP361493 and EP728769.

Preferred electron-donor compounds that can be used as external donors include aromatic silicon compounds containing at least one Si-OR bond, where R is a hydrocarbon radical. A particularly preferred class of external donor compounds is that of silicon compounds of formula $(R_5)_a(R_6)_bSi(OR_7)_c$, where a and b are integer from 0 to 2, c is an integer from 1 to 4 and the sum (a+b+c) is 4; $R_5$, $R_6$, and $R_7$, are C1-C18 hydrocarbon groups optionally containing heteroatoms. Particularly preferred are the silicon compounds in which a is 1, b is 1, c is 2, at least one of $R_5$ and $R_6$ is selected from branched alkyl, alkenyl, alkylene, cycloalkyl or aryl groups with 3-10 carbon atoms optionally containing heteroatoms and $R_7$ is a C1-C10 alkyl group, in particular methyl. Examples of such preferred silicon compounds are cyclohexyltrimethoxysilane, t-butyltrimethoxysilane, t-hexyltrimethoxysilane, cyclohexylmethyldimethoxysilane, 3,3,3-trifluoropropyl-2-ethylpiperidyl-dimethoxysilane, diphenyldimethoxysilane, methyl-t-butyldimethoxysilane, dicyclopentyldimethoxysilane, 2-ethylpiperidinyl-2-t-butyldimethoxysilane, (1,1,1-trifluoro-2-propyl)-methyldimethoxysilane and (1,1,1-trifluoro-2-propyl)-2-ethylpiperidinyldimethoxysilane. Moreover, are also preferred the silicon compounds in which a is 0, c is 3, $R_6$ is a branched alkyl or cycloalkyl group, optionally containing heteroatoms, and $R_7$ is methyl. Particularly preferred specific examples of silicon compounds are (tert-butyl)$_2$Si(OCH$_3$)$_2$, (cyclohexyl)(methyl) Si(OCH$_3$)$_2$, (phenyl)$_2$Si(OCH$_3$)$_2$, (cyclopentyl)$_2$Si(OCH$_3$)$_2$, and di-iso-propyl-di-methoxi-silane.

Preferably the external electron donor compound is used in such an amount to give a molar ratio between the organo-aluminum compound and said electron donor compound from 0.1 to 500, more preferably from 1 to 300 and in particular from 3 to 30.

The catalyst may comprise more than one internal donor as well as more than one external donor

As explained above, the solid catalyst component comprises, in addition to the above electron donors, Ti, Mg and halogen. In particular, the catalyst component comprises a titanium compound, having at least a Ti-halogen bond and the above mentioned electron donor compounds supported on a Mg halide. The magnesium halide is preferably $MgCl_2$ in active form, which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerisation of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds are $TiCl_4$ and $TiCl_3$; furthermore, also Ti-haloalcoholates of formula $Ti(OR)_{n-y}X_y$ can be used, where n is the valence of titanium, y is a number between 1 and n, X is halogen and R is a hydrocarbon radical having from 1 to 10 carbon atoms.
The preparation of the solid catalyst component can be carried out according to several methods, well known and described in the art.

According to a preferred method, the solid catalyst component can be prepared by reacting a titanium compound of formula $Ti(OR)_{n-y}X_y$, where n is the valence of titanium and y is a number between 1 and n, preferably $TiCl_4$, with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130 °C). Then, the emulsion is quickly quenched, thereby causing the solidification of the adduct in form of spherical particles.

Examples of spherical adducts prepared according to this procedure are described in USP 4,399,054 and USP 4,469,648. The so obtained adduct can be directly reacted with the Ti compound or it can be previously subjected to thermally controlled dealcoholation (80-130 °C) so as to obtain an adduct in which the number of moles of alcohol is generally lower than 3, preferably between 0.1 and 2.5. The reaction with the Ti compound can be carried out by

suspending the adduct (dealcoholated or as such) in cold $TiCl_4$ (generally 0 °C); the mixture is heated up to 80-130 °C and kept at this temperature for 0.5-2 hours. The treatment with $TiCl_4$ can be carried out one or more times. The electron donor compound(s) can be added during the treatment with $TiCl_4$.

Regardless of the preparation method used, the final amount of the electron donor compound(s) is preferably such that the molar ratio with respect to the $MgCl_2$ is from 0.01 to 1, more preferably from 0.05 to 0.5.
The said catalyst components and catalysts are described in WO 00/63261 and WO 01/57099.

The catalysts may be precontacted with small quantities of olefin (prepolymerisation), maintaining the catalyst in suspension in a hydrocarbon solvent, and polymerising at temperatures from ambient to 60 °C, thus producing a quantity of polymer from 0.5 to 3 times the weight of the catalyst. The operation can also take place in liquid monomer, producing, in this case, a quantity of polymer 1000 times the weight of the catalyst.

By using the above mentioned catalysts, the polyolefin compositions are obtained in spheroidal particle form, the particles having an average diameter from about 250 to 7,000 micrometers ($\mu$m), a flowability of less than 30 seconds and a bulk density (compacted) greater than 0.4 g/ml.

Besides the nucleating agent, the compositions disclosed herein can contain other additives commonly employed in the art, such as antioxidants, light stabilizers, heat stabilizers, colorants and fillers.

The addition of inorganic fillers, such as talc, calcium carbonate and mineral fibers, brings about an improvement to some mechanical properties, such as flexural modulus and heat deflection temperature (HDT).

The compositions disclosed herein can be used to prepare molded articles endowed with excellent impact behaviour.

The thus obtained molded articles, due to their excellent impact properties, particularly at low temperatures, are suitable for use as food containers, particularly as containers for storing food in a refrigerator.

The following examples are given to illustrate the present invention without any limiting purpose.

EXAMPLES

**Methods**

<u>Ethylene content</u>

The content of ethylene comonomer was determined by infrared spectroscopy by collecting the IR spectrum of the sample vs. an air background with a Fourier Transform Infrared spectrometer (FTIR). The instrument data acquisition parameters are:

- purge time: 30 seconds minimum
- collect time: 3 minutes minimum
- apodization: Happ-Genzel
- resolution: 2 $cm^{-1}$.

Sample Preparation - Using a hydraulic press, a thick sheet is obtained by pressing about 1 g of sample between two aluminum foils. A small portion is cut from this sheet to mold a film. Recommended film thickness ranges between 0.02 and 0.05 cm (8 - 20 mils). Pressing temperature is 180$\pm$10°C (356°F) and about 10 kg/cm2 (142.2 PSI) pressure for about one minute. After the pressure is released, the sample is removed from the press and cooled to room temperature.

The spectrum of pressed film sample is recorded in absorbance vs. wavenumbers ($cm^{-1}$). The following measurements are used to calculate ethylene content:

- Area (At) of the combination absorption bands between 4482 and 3950 $cm^{-1}$ which is used for spectrometric normalization of film thickness;
- Area (AC2) of the absorption band between 750-700 $cm^{-1}$ after a spectroscopic subtraction of a reference spectrum of an isotactic non-additivated polypropylene in the range 800-690 $cm^{-1}$;

In order to calculate the ethylene content, a calibration straight line for ethylene obtained by using samples of known amount of ethylene is needed and is obtained by plotting AC2/At versus ethylene molar percent (%C2m). The slope GC2 is calculated from a linear regression.

The spectra of the unknown samples are recorded and then (At) and (AC2) of the unknown sample are calculated. The ethylene content by weight is obtained being converted from the ethylene content (% molar fraction C2m) of the sample, which is calculated as follows:

$$\%C2m = \frac{1}{G_{C2}} \cdot \frac{A_{C2}}{A_t}$$

The ethylene content of component (a) was determined on a propylene copolymer sample taken out from the first reactor.

The ethylene content of component (b) was determined on the precipitated "amorphous" fraction of the polymer. The precipitated "amorphous" fraction was obtained as follows: to one 100 ml aliquot of the filtered liquid obtained as described below in the paragraph headed "Intrinsic viscosity of the xylene-soluble fraction", 200 ml of acetone were added under vigorous stirring. Precipitation must be complete as evidenced by a clear solid-solution separation. The solid thus obtained was filtered on a metallic screen and dried in a vacuum oven at 70 °C until a constant weight was reached. Since the portion of (b) with very high ethylene content crystallizes and is excluded from the xylene-soluble fraction, a correction was made to the ethylene content of the "amorphous" fraction by using the following equation obtained from the data of copolymers of ethylene with propylene polymerized in an autoclave by using the same catalyst systems:

(ethylene content of component (b)) = 1.37 x (ethylene content of “amorphous” fraction) - 5.7

The above equation is valid when the ethylene content of "amorphous" is between 50% and 70% by weight (the ethylene content of (b) is comprised between 63% and 90% by weight).

Intrinsic viscosity of the xylene-soluble fraction (XSIV)

2.5 g of polymer and 250 ml of xylene were introduced in a glass flask equipped with a refrigerator and a magnetic stirrer. The temperature is raised in 30 minutes up to the boiling point of the solvent. The so obtained clear solution is then kept under reflux and stirring for further 30 minutes. The closed flask is then kept in thermostatic water bath at about 25 °C for 30 minutes. The so formed solid is filtered on quick filtering paper. A 100 ml aliquot of the filtered liquid was poured in an aluminium container, heated on a heating plate under nitrogen flow, to remove the solvent by evaporation. The sample for the measurement was removed from the container after cooling 30 minutes at room temperature. The Intrinsic viscosity was determined in tetrahydronaphthalene at 135 °C.

Melt flow rate (MFR)

Determined according to ISO 1133 (230 °C, 2.16 Kg).

Haze

Determined according to ASTM D10003-61. 5x5 cm specimens are cut from molded plaques of 1 mm thick and the haze value is measured using a Gardner photometric unit connected to a Hazemeter type UX-10 or an equivalent instrument having G.E.1209 light source with filter "C" . Reference samples of known haze are used for calibrating the instrument. The plaques to be tested are produced according to the following method. 75x75x1 mm plaques are molded with a GBF Plastiniector G235/90 Injection Molding Machine, 90 tons under the following processing conditions:

- Screw rotation speed - 120 rpm
- Back pressure - 10 bar
- Melt temperature - 260 °C
- Injection time - 5 sec
- Switch to hold pressure - 50 bar
- First stage hold pressure - 30 bar
- Second stage pressure - 20 bar
- Hold pressure profile, 1st stage - 5 sec
- Hold pressure profile, 2nd stage - 10 sec
- Cooling time - 20 sec
- Mold water temperature - 40 °C

Flexural modulus

Determined according to ISO 178.

Puncture resistance at -20 °C

Determined by using Hydroshot HITS-T10 (SHIMADZU CORPORATION) for plaques produced according to the following method. 130x130x2 mm plaques are molded with a $\alpha$ 100C Injection Molding Machine (FANUC CORPORATION) under 230 °C of melt temperature and 500 bar of hold pressure.

Spiral flow

Determined by measuring the spiral length of injection molded articles with a mold of Archimedes spiral having a trapezoidal cross-section (upper bottom: 9.5 mm, lower bottom: 10 mm, height: 1 mm) of flow channel. The spiral articles to be tested are molded with a $\alpha$ 100C Injection Molding Machine (FANUC CORPORATION) under the following processing conditions:

- Melt temperature - 250 °C
- Injection pressure - 765 bar
- Injection speed - 10 mm/ sec
- Hold pressure - 735-745 bar
- Hold pressure time - 3 sec
- Cooling time - 10 sec
- Mold water temperature - 40 °C

**Examples**

A series of polymerization runs were carried out in a plant operating continuously in a series of a first liquid-phase reactor and a second fluidized bed gas-phase reactor, equipped with devices to transfer the product from the first to the second reactor.

**Examples 1 and 2C (comparative)**

Preparation of the catalyst and pre-polymerization

A Ziegler-Natta catalyst component was prepared according to Example 5, lines 48-55 of European Patent EP728769. The thus-prepared catalyst component was contacted at 12 °C for 24 minutes with aluminium triethyl (TEAL) and dicyclopentyldimethoxysilane (DCPMS) as outside-electron-donor component. The weight ratio between TEAL and the solid catalyst component was 20 and the weight ratio between TEAL and DCPMS was 10. The thus-obtained catalyst system was subjected to pre-polymerization by maintaining it in suspension in liquid propylene at 20 °C for about 5 minutes before introducing it into the first polymerization reactor.

Polymerization

A propylene homopolymer as component (a) was prepared in the first reactor, while an ethylene-propylene copolymer as component (b) was prepared in the second reactor. Temperature and pressure were maintained constant throughout the course of the reaction. Hydrogen was used as molecular weight regulator. The composition of the gas phase (propylene, ethylene and hydrogen) was continuously determined by gas-chromatography analysis. At the end of the run the powder is discharged and dried under a nitrogen flow. Data on the polymerization conditions for the liquid-phase and gas-phase reactor and on the characterization of the polymer obtained therefrom are shown in Table 1 and Table 2 respectively. The polymer characterization data are obtained from measurements carried out on the so obtained polymers, stabilized when necessary.

Extrusion

The polymer particles were then introduced in an extruder, wherein they were mixed with:

- 2000 ppm of 1,3:2,4-bis(3,4-dimethylbenzylidene) sorbitol, a clarifying agent marketed by Milliken under the name

Millad 3988,
- 0.10 wt. % of an antioxidant marketed by BASF under the name B225, and
- 0.05 wt. % of calcium stearate.

The polymer particles were then extruded under nitrogen atmosphere in a twin screw extruder, at a rotation speed of 220 rpm and a melt temperature of 200-250 °C. Data relating to the physical-mechanical properties of the final polymer compositions, obtained from measurements carried out on the so-extruded polymers, are reported in Table 3.

**Examples 3, 4C (comparative) and 5C (comparative)**

The procedure described for Examples 1 and 2C was repeated with the difference that the Ziegler-Natta catalyst was prepared according to Example 1 of International application WO 2009/050045 except that, for the first temperature increase, the temperature was raised to 110 °C instead of 100 °C. For comparative example 5C no clarifying agent Millad 3988 was mixed with the polymer particles for extrusion. Data on the polymerization conditions for the liquid-phase and gas-phase reactor and on the characterization of the polymer obtained therefrom are shown in Table 1 and Table 2 respectively. Data relating to the physical-mechanical properties of the final polymer compositions, obtained from measurements carried out on the so-extruded polymers, are reported in Table 3.

**Table 1 - liquid phase polymerization**

| EXAMPLE | | 1 | 2C | 3 | 4C | 5C |
|---|---|---|---|---|---|---|
| Temperature | °C | 75 | 75 | 75 | 75 | 75 |
| Pressure | MPa | 39.4 | 39.4 | 39.5 | 39.5 | 39.5 |
| Residence time | min | 60 | 60 | 90 | 90 | 90 |
| H2 conc on feed | ppm | 8300 | 8200 | 6700 | 6500 | 6700 |

**Table 2 - gas phase polymerization**

| EXAMPLE | | 1 | 2C | 3 | 4C | 5C |
|---|---|---|---|---|---|---|
| Temperature | °C | 80 | 80 | 80 | 80 | 80 |
| Pressure | MPa | 16 | 16 | 14 | 14 | 14 |
| Residence time | min | 35 | 27 | 33 | 30 | 33 |
| H2/C2 | mol ratio | 0.66 | 0.6 | 0.5 | 0.4 | 0.5 |
| C2/(C2+C3) | mol ratio | 0.82 | 0.79 | 0.71 | 0.70 | 0.71 |
| Component(b) | wt% | 27 | 23 | 25 | 25 | 25 |
| C2 in comp. (b) | wt% | 77 | 78 | 77 | 76 | 77 |
| XSIV | dl/g | 1.1 | 1.0 | 1.1 | 1.4 | 1.1 |
| MFR | g/10min | 49 | 42 | 41 | 35 | 41 |

**Table 3 - properties of composition**

| EXAMPLE | | 1 | 2C | 3 | 4C | 5C* |
|---|---|---|---|---|---|---|
| Haze | % | 25 | 24 | 28 | 37 | 40 |
| Flex. Mod. | MPa | 1380 | 1420 | 1510 | 1530 | 1320 |
| Puncture Resistance | J | 8.0 | 0.9 | 7.9 | 10.9 | 7.0 |
| Spiral flow | cm | 32.7 | 31.8 | 33.2 | 32.3 | 33.3 |
| *No Millad 3988 used | | | | | | |

## Claims

1. A propylene polymer composition comprising:

   (a) 68 - 76 wt. %, based upon the total weight of components (a) to (c), of first polymer component being a propylene homopolymer or a copolymer of propylene, wherein the copolymer of propylene contains up to 1.2 wt. %, of ethylene derived units;
   (b) 24 - 32 wt. %, based upon the total weight of components (a) to (c), of second polymer component being a copolymer comprising 72 to 86 wt. % ethylene derived units and 14 to 28 wt. % propylene derived units; and
   (c) a nucleating agent;
   wherein the polypropylene composition has an intrinsic viscosity of the xylene soluble fraction (XSIV) at room temperature up to 1.3 dl/g and a melt flow rate (MFR), measured at 230°C and 2.16 kg, from 30 to 70 g/10 min.

2. The propylene polymer composition according to claim 1, wherein the nucleating agent is present in amount from 0.01 to 2% by weight, preferably from 0.05 to 1% by weight, more preferably from 0.1 to 0.5% by weight, based upon the total weight of components (a) to (c).

3. The propylene polymer composition according to claims 1 or 2, wherein the nucleating agent is selected among talc, 1,3:2,4-dibenzylidenesorbitol, 1,3:2,4-bis-(4-methylbenzylidene) sorbitol, 1,3:2,4-bis-(3,4-dimethylbenzylidene sorbitol), 1,2,3-trideoxy-4,6:5,7-bis-O-[(4-propylphenyl)methylene]-nonitol, 1,3,5-tris(2,2-dimethylpropionylamino)benzene, and phosphoric esters of the formula:

   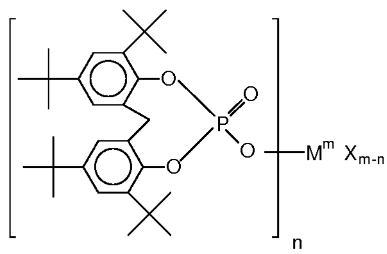

   wherein M is aluminum, X is a hydroxy group, m is 3, n is 1 or 2.

4. A process for the preparation of the polyolefin compositions according to claims 1 to 3, said process comprising at least two sequential polymerization stages with each subsequent polymerization being conducted in the presence of the polymeric material formed in the immediately preceding polymerization reaction, wherein the polymerization stage of propylene to the polymer component (a) is carried out in at least one stage, then at least one copolymerization stage of mixtures of ethylene with propylene to the polymer component (b) is carried out.

5. The process according to claim 4, wherein the polymerisation stages are carried out in the presence of a stereospecific Ziegler-Natta catalyst.

6. The process according to claims 4 or 5 wherein the stereospecific Ziegler-Natta catalyst comprises:

   (iv) a solid catalyst component comprising Mg, Ti, halogen and an electron donor (internal donor);
   (v) an aluminium-alkyl compound (co-catalyst); and
   (vi) optionally an electron-donor compound (external donor).

7. The process according to any of claims 4 to 6, wherein the polymerisation of the polymer component (a) is carried out in liquid monomer, while the copolymerisation stages of the copolymer component (b) is carried out in gas phase.

8. A molded article obtained from a propylene polymer composition comprising:

   (a) 68 - 76 wt. %, based upon the total weight of components (a) to (c), of first polymer component being a propylene homopolymer or a copolymer of propylene, wherein the copolymer of propylene contains up to 1.2 wt. %, of ethylene derived units;
   (b) 24 - 32 wt. %, based upon the total weight of components (a) to (c), of second polymer component being a copolymer comprising 72 to 86 wt. % ethylene derived units and 14 to 28 wt. % propylene derived units; and

(c) a nucleating agent;
wherein the polypropylene composition has an intrinsic viscosity of the xylene soluble fraction (XSIV) at room temperature up to 1.3 dl/g and a melt flow rate (MFR), measured at 230°C and 2.16 kg, from 30 to 70 g/10 min.

**9.** A molded article according to claim 8, which is a container.

**Patentansprüche**

**1.** Propylenpolymerzusammensetzung, umfassend:

(a) 68 bis 76 Gew.%, bezogen auf das Gesamtgewicht der Komponenten (a) bis (c), von einer ersten Polymerkomponente, die ein Propylenhomopolymer oder ein Copolymer von Propylen ist, wobei das Copolymer von Propylen bis zu 1,2 Gew.% von Ethylen abgeleitete Einheiten enthält;
(b) 24 bis 32 Gew.%, bezogen auf das Gesamtgewicht der Komponenten (a) bis (c), von einer zweiten Polymerkomponente, die ein Copolymer ist, das 72 bis 86 Gew.% von Ethylen abgeleitete Einheiten und 14 bis 28 Gew.% von Propylen abgeleitete Einheiten umfasst; und
(c) ein Nukleierungsmittel;
wobei die Polypropylenzusammensetzung eine Grenzviskosität der in Xylol löslichen Fraktion (XSIV) bei Raumtemperatur von 1,3 dl/g und eine Schmelzflussrate (MFR), gemessen bei 230 °C und 2,16 kg, von 30 bis 70 g/10 Min aufweist.

**2.** Propylenpolymerzusammensetzung nach Anspruch 1, wobei das Nukleierungsmittel in einer Menge von 0,01 bis 2 Gew.%, vorzugsweise 0,05 bis 1 Gew.%, bevorzugter 0,1 bis 0,5 Gew.% vorhanden ist, bezogen auf das Gesamtgewicht der Komponenten (a) bis (c).

**3.** Propylenpolymerzusammensetzung nach den Ansprüchen 1 oder 2, wobei das Nukleierungsmittel ausgewählt ist aus Talkum, 1,3:2,4-Dibenzylidensorbitol, 1,3:2,4-Bis-(4-methylbenzyliden)sorbitol, 1,3:2,4-Bis-(3,4-dimethylbenzylidensorbitol), 1,2,3-Trideoxy-4,6:5,7-bis-O-[(4-propylphenyl)methylen]-nonitol, 1,3,5-Tris(2,2-dimethylpro-pionylamino)benzol und Phosphorsäureestern mit der Formel:

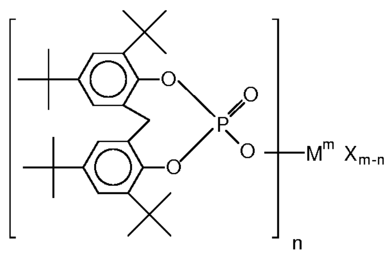

wobei M Aluminium ist, X eine Hydroxygruppe ist, m 3 ist, n 1 oder 2 ist.

**4.** Verfahren zur Herstellung der Polyolefinzusammensetzungen nach den Ansprüchen 1 bis 3, wobei das Verfahren mindestens zwei aufeinander folgende Polymerisationsstufen umfasst, wobei jede nachfolgende Polymerisation in Gegenwart des polymeren Materials durchgeführt wird, das in der unmittelbar vorangehenden Polymerisationsreaktion gebildet wurde, wobei die Polymerisationsstufe von Propylen zu der Polymerkomponente (a) in mindestens einer Stufe durchgeführt wird und dann mindestens eine Copolymerisationsstufe von Mischungen von Ethylen mit Propylen zu der Polymerkomponente (b) durchgeführt wird.

**5.** Verfahren nach Anspruch 4, wobei die Polymerisationsstufen in Gegenwart eines stereospezifischen Ziegler-Natta-Katalysators durchgeführt werden.

**6.** Verfahren nach Anspruch 4 oder 5, wobei der stereospezifische Ziegler-Natta-Katalysator umfasst:

(iv) eine feste Katalysatorkomponente, die Mg, Ti, Halogen und einen Elektronendonor (internen Donor) umfasst;
(v) eine Aluminiumalkylverbindung (Cokatalysator) und
(vi) gegebenenfalls eine Elektronendonorverbindung (externen Donor).

**7.** Verfahren nach einem der Ansprüche 4 bis 6, wobei die Polymerisation der Polymerkomponente (a) in flüssigem Monomer durchgeführt wird, während die Copolymerisationsstufen der Copolymerkomponente (b) in der Gasphase durchgeführt werden.

**8.** Geformter Artikel, der aus einer Propylenpolymerzusammensetzung erhalten wird, umfassend:

(a) 68 bis 76 Gew.%, bezogen auf das Gesamtgewicht der Komponenten (a) bis (c), von einer ersten Polymerkomponente, die ein Propylenhomopolymer oder ein Copolymer von Propylen ist, wobei das Copolymer von Propylen bis zu 1,2 Gew.% von Ethylen abgeleitete Einheiten enthält;
(b) 24 bis 32 Gew.%, bezogen auf das Gesamtgewicht der Komponenten (a) bis (c), von einer zweiten Polymerkomponente, die ein Copolymer ist, das 72 bis 86 Gew.% von Ethylen abgeleitete Einheiten und 14 bis 28 Gew.% von Propylen abgeleitete Einheiten umfasst; und
(c) ein Nukleierungsmittel;
wobei die Polypropylenzusammensetzung eine Grenzviskosität der in Xylol löslichen Fraktion (XSIV) bei Raumtemperatur von 1,3 dl/g und eine Schmelzflussrate (MFR), gemessen bei 230 °C und 2,16 kg, von 30 bis 70 g/10 Min aufweist.

**9.** Geformter Artikel nach Anspruch 8, der ein Behälter ist.

**Revendications**

**1.** Composition de polymère de propylène comprenant :

(a) 68 à 76 % en poids, sur la base du poids total des composants (a) à (c), d'un premier composant polymère qui est un homopolymère de propylène ou un copolymère de propylène, le copolymère de propylène contenant jusqu'à 1,2 % en poids, d'unités dérivées de l'éthylène ;
(b) 24 à 32 % en poids, sur la base du poids total des composants (a) à (c), d'un second composant polymère qui est un copolymère comprenant 72 à 86 % en poids d'unités dérivées de l'éthylène et 14 à 28 % en poids d'unités dérivées du propylène ; et
(c) un agent de nucléation ;
la composition de polypropylène ayant une viscosité intrinsèque de la fraction soluble dans le xylène (XSIV) à température ambiante jusqu'à 1,3 dl/g et un indice de fluidité à chaud (MFR), mesuré à 230 °C et 2,16 kg, allant de 30 à 70 g/10 min.

**2.** Composition de polymère de propylène selon la revendication 1, dans laquelle l'agent de nucléation est présent en quantité allant de 0,01 à 2 % en poids, de préférence allant de 0,05 à 1 % en poids, plus préférablement allant de 0,1 à 0,5 % en poids, sur la base du poids total des composants (a) à (c).

**3.** Composition de polymère de propylène selon les revendications 1 ou 2, dans laquelle l'agent de nucléation est choisi parmi le talc, le 1,3 :2,4-dibenzylidènesorbitol, le 1,3:2,4-bis-(4-méthylbenzylidène) sorbitol, le 1,3:2,4-bis-(3,4-diméthylbenzylidène sorbitol), le 1,2,3-tridésoxy-4,6:5,7-bis-O-[(4-propylphényl)méthylène]-nonitol, le 1,3,5-tris(2,2-diméthylpropionylamino)benzène, et les esters phosphoriques de formule :

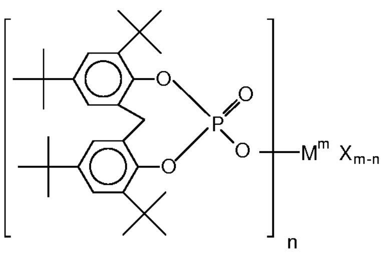

dans laquelle M est l'aluminium, X est un groupe hydroxy, m vaut 3, n vaut 1 ou 2.

**4.** Procédé de préparation des compositions de polyoléfine selon les revendications 1 à 3, ledit procédé comprenant au moins deux étapes de polymérisation séquentielles, chaque polymérisation ultérieure étant conduite en présence du matériau polymère formé dans la réaction de polymérisation immédiatement précédente, dans lequel l'étape de

polymérisation du propylène en composant polymère (a) est réalisée dans au moins une étape, puis au moins une étape de copolymérisation de mélanges d'éthylène avec du propylène en composant polymère (b) est réalisée.

**5.** Procédé selon la revendication 4, dans lequel les étapes de polymérisation sont réalisées en présence d'un catalyseur Ziegler-Natta stéréospécifique.

**6.** Procédé selon les revendications 4 ou 5 dans lequel le catalyseur Ziegler-Natta stéréospécifique comprend :

(iv) un composant catalyseur solide comprenant Mg, Ti, halogène et un donneur d'électrons (donneur interne) ;
(v) un composé alkylé d'aluminium (co-catalyseur) ; et
(vi) éventuellement un composé donneur d'électrons (donneur externe).

**7.** Procédé selon l'une quelconque des revendications 4 à 6, dans lequel la polymérisation du composant polymère (a) est réalisée dans un monomère liquide, tandis que les étapes de copolymérisation du composant copolymère (b) sont réalisées en phase gazeuse.

**8.** Article moulé obtenu à partir d'une composition de polymère de propylène comprenant :

(a) 68 à 76 % en poids, sur la base du poids total des composants (a) à (c), d'un premier composant polymère qui est un homopolymère de propylène ou un copolymère de propylène, le copolymère de propylène contenant jusqu'à 1,2 % en poids, d'unités dérivées de l'éthylène ;
(b) 24 à 32 % en poids, sur la base du poids total des composants (a) à (c), d'un second composant polymère qui est un copolymère comprenant 72 à 86 % en poids d'unités dérivées de l'éthylène et 14 à 28 % en poids d'unités dérivées du propylène ; et
(c) un agent de nucléation ;
la composition de polypropylène ayant une viscosité intrinsèque de la fraction soluble dans le xylène (XSIV) à température ambiante jusqu'à 1,3 dl/g et un indice de fluidité à chaud (MFR), mesuré à 230 °C et 2,16 kg, allant de 30 à 70 g/10 min.

**9.** Article moulé selon la revendication 8, qui est un récipient.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US P4399054 A
- EP 45977 A
- US P4472524 A
- US P4522930 A
- WO 0063261 A
- WO 0157099 A
- EP 361493 A
- EP 728769 A
- US P4298718 A
- US P4495338 A
- US P4469648 A
- WO 2009050045 A